# EUROPEAN PATENT APPLICATION

(11) **EP 2 950 426 A1**
(43) Date of publication of application: **02.12.2015**
(21) Application number: 15168412.3
(22) Date of filing: 20.05.2015
(51) Int. Cl.: H02K 5/14

(54) **ELECTRIC MOTOR AND ITS MOTOR HOUSING**

(30) Priority: 25.05.2014 CN 201410230612
(71) Applicant: ROBERT BOSCH GMBH, 70442 Stuttgart (DE)
(72) Inventor: Han, Helei, 410100 Changsha, Hunan (CN)

(57) **Abstract**

The invention provides a motor housing which comprises a first cylinder and a second cylinder concentrically assembled in the first cylinder, the second cylinder being formed with a brush holder mounting portion, wherein the motor housing defines an axial direction extending along its central axis and a radial direction extending perpendicularly to the axial direction, an end of the second cylinder is recessed into the first cylinder relative to a corresponding end of the first cylinder along the axial direction and thus forms a step, and the brush holder mounting portion is offset radially inwards from the end of the second cylinder towards the central axis.

## Description

### Technical Field

The invention relates to a motor housing and an electric motor comprising the motor housing.

### Background Art

Electric motors generally comprise a motor housing and internal components housed in the motor housing, including, but not limited to, functional components, such as magnetic pole pieces, excitation windings, an armature, a commutator, carbon brushes, and an output shaft of the electric motor etc., and accessories, such as bearings etc.

According to prior art, the motor housing is manufactured by casting and then machining the casted part. For example, in order to fix a brush holder on which the carbon brushes are mounted, an inner surface of the motor housing is often needed to be machined to form a step on the inner surface of the motor housing which is configured for fixing the brush holder.

The machining process of the inner surface of the motor housing not only causes waste of material but also causes the process complicated.

It is thus desired to improve the structure of the motor housing and to provide an improved brush holder fixing structure for fixing the brush holder in the motor housing.

### Summary of the Invention

An object of the invention is to improve and simplify the structure of a motor housing of an electric motor, to improve and simplify a brush holder mounting structure in the motor housing which is configured for the mounting of a brush holder, to simplify manufacturing processes of the motor housing and thus of an entire electric motor comprising the motor housing, and therefore to reduce their manufacturing costs.

For this end, according to a first aspect of the invention, a motor housing is provided which comprises a first cylinder and a second cylinder concentrically assembled in the first cylinder, the second cylinder being formed with a brush holder mounting portion, wherein the motor housing defines an axial direction extending along its central axis and a radial direction extending perpendicularly to the axial direction, an end of the second cylinder is recessed into the first cylinder relative to a corresponding end of the first cylinder in the axial direction and thus forms a step, and the brush holder mounting portion is offset radially inwards from the end of the second cylinder towards the central axis.

Optionally, the brush holder mounting portion is an integral protrusion protruding radially inwards from the end of the second cylinder towards the central axis.

Optionally, the brush holder fixing portion comprises two or more protrusions distributed uniformly around the central axis.

Optionally, the second cylinder is assembled in the first cylinder by press-fit.

Optionally, the first and second cylinders comprise standard seamless steel pipes, or are formed by rolling steel sheets.

According to a second aspect of the invention, an electric motor is provided which comprises: a motor housing described as above; and a brush holder fixed on the brush holder mounting portion of the electric motor housing, wherein carbon brushes of the motor are mounted on the brush holder.

Optionally, the brush holder is fixed on the brush holder mounting portion by means of a brush holder fixing element, the brush holder fixing element being provided as a circular plate, and the brush holder being fixed on the motor housing by means of fastening elements passing through fixing holes in the brush holder mounting portion and fixing holes in the brush holder fixing element.

Optionally, the brush holder fixing element comprises a central hole through which an output shaft of the electric motor can pass, a plurality of spacing slots extending radially outwards from the central hole, and a plurality of sector portions spaced apart by the spacing slots, and the fixing holes of the brush holder fixing element are disposed on two of the sector portions which are opposite to each other.

Optionally, the brush holder mounting portion comprises two or more fixing holes distributed uniformly around the central axis and the brush holder fixing element comprises two or more fixing holes arranged correspondingly, and wherein, the electric motor is an electric motor for a vehicle engine.

Optionally, the brush holder fixing element comprises four spacing slots and four sector portions, and the electric motor comprises four, six or more carbon brushes.

The electric motor according to the invention comprises a double-layer motor housing, and in particular, comprises first and second cylinders assembled together by press-fit, the second cylinder being integrally formed with a carbon brush mounting portion for the mounting of carbon brushes. With the motor housing constructed as above, complicated machining operations are eliminated, dimensions and mounting precisions can be better ensured, and the technical objection of simplifying the manufacturing process and reducing its manufacturing cost is achieved. The brush holder mounting structure of the double-layer motor housing has a simple design and the manufacturing process is simplified.

### Brief Description of the Drawings

The above and other features and advantages of the invention will be understood more completely from the following detailed description in conjunction with the drawings, in which:
Figure 1 is a perspective view of a motor housing of an electric motor according to the invention;
Figure 2 is a longitudinal cross section of the motor housing in which a brush holder fixing element is mounted;
Figure 3 is a top view showing a brush holder mounted in the motor housing; and
Figure 4 is a longitudinal cross section in an axial direction of the motor housing of Figure 3.

### Detailed Description of Preferred Embodiments

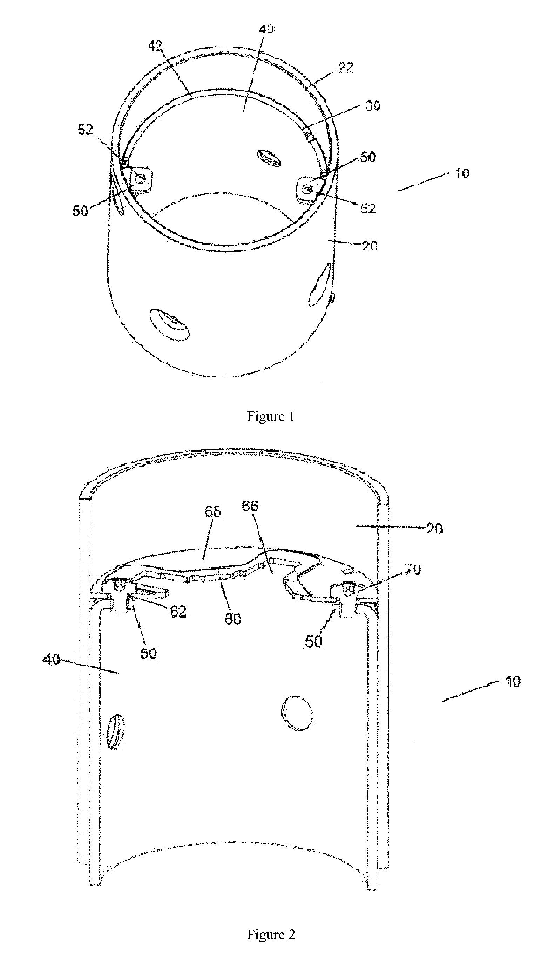

Preferred embodiments of the invention will be described with respect to Figures 1-4. Throughout the drawings, features with same or similar structures or functions are denoted by the same reference numbers.

The invention is applicable in all electric motors of the type including carbon brushes, for example, electric motors for vehicle engines.

According to the invention, an electric motor comprises a double-layer motor housing 10 and internal components (not shown) housed therein, including, but not limited to, functional components, such as magnetic pole pieces, excitation windings, an armature, carbon brushes, and an output shaft of the electric motor etc., and accessories, such as bearings etc.

As shown in Figure 1, the double-layer motor housing 10 according to the invention has a cylindrical shape and consists of two separate parts, a first cylinder 20 and a second cylinder 40 concentrically positioned within the first cylinder 20. The double-layer motor housing 10 defines an axial direction extending along a central axis of the double-layer motor housing 10 having the cylindrical shape and a radial direction extending perpendicularly to the axial direction.

The second cylinder 40 is mounted in the first cylinder 20 in a manner of interference fit, and, for example, is press-fit in the first cylinder 20. Additionally or alternatively, the second cylinder 40 can also be riveted to the first cylinder 20, such as piercing riveted or point riveted to the first cylinder 20. It should be appreciated to a skilled in the art that the deformations of the two cylinders need to be controlled during the piercing riveting or point riveting process.

The first and second cylinders 20 and 40 can be formed with standard steel tubes available from the market, or can be formed by rolling a steel sheet. Alternatively, standard seamless steel pipes purchased from the market having a high strength can be used here and thus the rolling process of the steel sheet can be omitted. A very high dimensional precision, which can not be achieved by rolling the steel sheet, can be achieved with the standard seamless steel pipes.

As can be seen from the drawings, the first cylinder 20 comprises a first end 22 and the second cylinder 40 comprises a corresponding first end 42, the first end 42 of the second cylinder 40 being recessed into the first end 22 of the first cylinder 20 in the axial direction, forming a step 30.

A tab 50 extends inwards in the radial direction form the first end 42 of the second cylinder 40 and forms a brush holder fixing portion for fixing a brush holder of the electric motor in the double-layer motor housing 10. The tab 50 extending in the radial direction as shown in Figure 1 is formed by first stamping the second cylinder 40, forming a tab along the axial direction, and then bending the tab along the axial direction towards the central axis before the second cylinder 40 is assembled in the first cylinder 20.

The tab 50 shown in Figure 1 has a substantially rectangular shape and is provided with fixing holes 52, and a brush holder fixing element 60 (Figure 2) on which the carbon brushes and the brush holder of the electric motor are mounted can be fixed in the motor housing by means of fastening elements passing through the fixing holes 52.

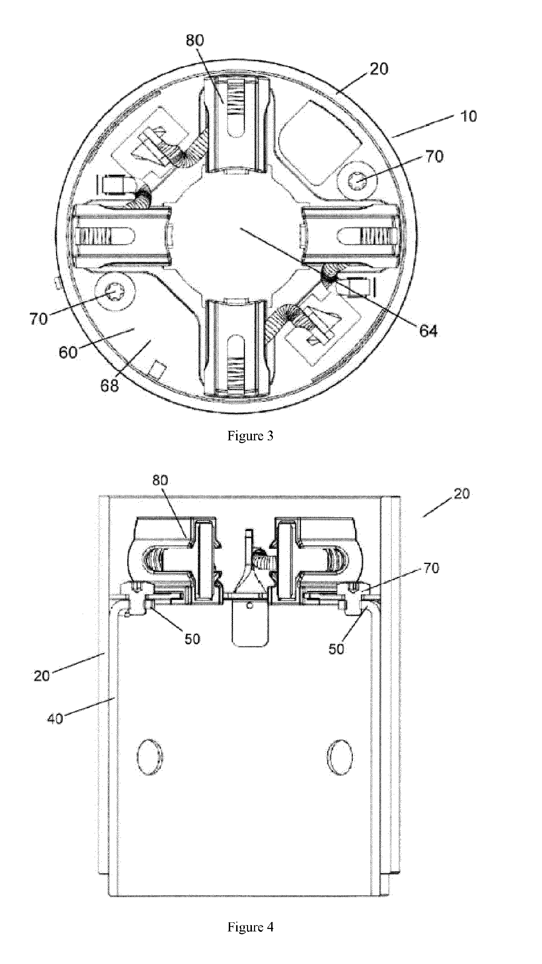

Figure 2 is an illustrative view showing that the brush holder fixing element 60 is fixed in the motor housing 10 by means of the fastening elements 70. Figure 3 shows four carbon brushes 80 fixed in the motor housing in a top view, and Figure 4 is a longitudinal cross section view in the axial direction showing that the four carbon brushes 80 are fixed in the motor housing 10 by means of the brush holder fixing element 60 and the fastening elements 70.

The brush holder fixing element 60 is provided in the form of a circular plate and is provided with fixing holes 62. The fastening elements 70 fix the brush holder fixing element 60, on which the carbon brushes 80 are mounted, on the second cylinder 40 by passing through the fixing holes 62 in the brush holder fixing element 60 and the fixing holes 52 in the tabs 50 of the second cylinder 40.

The brush holder fixing element 60 according to the invention comprises a central hole 64 (Figure 3) through which the output shaft of the electric motor can pass, spacing slots 66 extending radially outwards from the central hole 64, and sector portions 68 spaced apart by the spacing slots 66.

In this embodiment, four spacing slots 66 and four sector portions 68 are provided and distributed uniformly around the central axis, and the fixing holes 62 for fixing the brush holder fixing element 60 on the tabs 50 of the second cylinder 40 are disposed on two sector portions 68 opposite to each other. In this embodiment, the spacing slots 66 and sector portions 68 of the brush holder fixing element 60 can be used for the mounting of other functional elements of the electric motor.

It can be understood by the skilled in the art that the brush holder fixing element 60 is not limited to the circular plate as shown, and any structures that can be used for fixing the carbon brushes 80 and can be fixed in the motor housing 10 can be used.

Alternatively, the number of the fixing holes 62 in the brush holder fixing element 60 and that of the fixing holes 52 in the tabs 50 and that of the tabs 50 are not limited to two as shown, and instead can be three, four or more. However, preferably, the fixing holes 52 and 62 are arranged uniformly around the central axis of the motor housing.

It can be understood by the skilled in the art that the fixing holes 52 and 62 can be formed as through holes or threaded holes as desired. For example, in this embodiment, the fixing holes 62 are through holes and the fixing holes 52 are threaded holes.

Alternatively, the fastening elements 70 can be, but not limited to, countersunk head screws as illustrated. Any other kinds of fastening elements that can fix the brush holder fixing element 60 and the tabs 50 together can be used also.

It can also be understood by the skilled in the art that the brush holder fixing portion on the second cylinder 40 is not limited to be in the form of the tab 50 as shown. In this embodiment, the tab 50 has a rectangular shape; however, in other embodiments, any desired shapes, such as square, circular etc. can be provided as desired.

An electric motor according to the invention comprises a double-layer motor housing, and in particular, comprises first and second cylinders assembled together by press-fit. The second cylinder is provided and formed integrally with a carbon brush mounting portion for the mounting of carbon brushes. With the motor housing configured as above, complicated machining operations are eliminated, and dimensional precision and mounting precision can be better ensured. With the motor housing configured as above, the mounting structure of the carbon brushes has a simple design and its manufacturing is simplified.

Preferred embodiments of the invention have been described as above. However, the invention is not intended to be limited to the embodiments described above and shown in the drawings, and instead, modifications and variants can be made by the skilled in the art without departing from the spirit and scope of the invention defined by the following claims.

## Claims

1. A motor housing, **characterized in that** the motor housing comprises a first cylinder and a second cylinder concentrically assembled in the first cylinder, the second cylinder being formed with a brush holder mounting portion, wherein the motor housing defines an axial direction extending along its central axis and a radial direction extending perpendicularly to the axial direction, an end of the second cylinder is recessed into the first cylinder relative to a corresponding end of the first cylinder in the axial direction and thus forms a step, and the brush holder mounting portion is offset radially inwards from the end of the second cylinder towards the central axis.

2. The motor housing of claim 1, wherein the brush holder mounting portion is an integral protrusion protruding radially inwards from the end of the second cylinder towards the central axis.

3. The motor housing of claim 2, wherein the brush holder fixing portion comprises two or more protrusions distributed uniformly around the central axis.

4. The motor housing of claim 3, wherein the second cylinder is assembled in the first cylinder by press-fit.

5. The motor housing of any one of claims 1-4, wherein the first and second cylinders comprise standard seamless steel pipes, or are formed by rolling steel sheets.

6. An electric motor, **characterized in that** the electric motor comprises:
a motor housing according to any one of claims 1-5; and
a brush holder fixed on the brush holder mounting portion of the motor housing,
wherein carbon brushes of the electric motor are mounted on the brush holder.

7. The electric motor of claim 6, wherein the brush holder is fixed on the brush holder mounting portion by means of a brush holder fixing element, the brush holder fixing element being provided as a circular plate, and the brush holder being fixed on the motor housing by means of fastening elements passing through fixing holes in the brush holder mounting portion and fixing holes in the brush holder fixing element.

8. The electric motor of claim 7, wherein the brush holder fixing element comprises a central hole through which an output shaft of the electric motor can pass, a plurality of spacing slots extending radially outwards from the central hole, and a plurality of sector portions spaced apart by the spacing slots, and the fixing holes of the brush holder fixing element are disposed on two of the sector portions which are opposite to each other.

9. The electric motor of claim 8, wherein the brush holder mounting portion comprises two or more fixing holes distributed uniformly around the central axis and the brush holder fixing element comprises two or more fixing holes arranged correspondingly, and wherein, the electric motor is an electric motor for a vehicle engine.

10. The electric motor of any one of claims 6-9, wherein the brush holder fixing element comprises four spacing slots and four sector portions, and the electric motor comprises four, six or more carbon brushes.
